# EUROPÄISCHE PATENTSCHRIFT

(11) **EP 1 195 415 B1**
(45) Veröffentlichungstag und Bekanntmachung des Hinweises auf die Patenterteilung: **31.03.2004**
(21) Anmeldenummer: 01122053.0
(22) Anmeldetag: 14.09.2001
(51) Int. Cl.: C09B 67/00, C09B 67/20

(54) **Verfahren zur Feiunverteilung von Pigmenten**
Process for fine division of pigments
Procédé de broyage fin de pigments

(30) Priorität: 05.10.2000 DE 10049199
(43) Veröffentlichungstag der Anmeldung: 10.04.2002
(73) Patentinhaber: Clariant GmbH, 65929 Frankfurt am Main (DE)
(72) Erfinder: Dietz, Erwin, Dr., 61462 Königstein (DE); Weber, Joachim, Dr., 65929 Frankfurt am Main (DE); Schnaitmann, Dieter, Dr., 65817 Eppstein (DE); Wille, Christian, Dr., 69469 Weinheim (DE); Unverdorben, Leonhard, Dr., 61130 Nidderau (DE); Penth, Bernd Dr., 66822 Lebach (DE)
(74) Vertreter: Hütter, Klaus, Dr.

(56) Entgegenhaltungen:
- EP-A- 0 504 923
- EP-A- 0 666 288
- EP-A- 0 678 559
- EP-A- 0 870 809
- EP-A- 0 997 508
- WO-A-00/44673
- WO-A-00/61275
- DE-A- 19 910 521
- DATABASE INSPEC [Online] THE INSTITUTION OF ELECTRICAL ENGINEERS, STEVENAGE, GB; Inspec No. AN=7055219, 27. September 2000 (2000-09-27) B. PENTH: retrieved from INSPEC Database accession no. 7055219 XP002186544 & B. PENTH : "New non-clogging microreactor for chemical processing and nano materials" PROCEEDINGS MICROTEC 2000, Bd. 1, - 27. September 2000 (2000-09-27) Seiten 401-405, hannover
- DATABASE WPI Section Ch, Week 197607 Derwent Publications Ltd., London, GB; Class F09, AN 1976-12539X XP002186545 & SU 467 159 A (UKR CELL PAPER RES), 31. Juli 1975 (1975-07-31)

## Beschreibung

Die vorliegende Erfindung beschreibt ein umweltfreundliches und wirtschaftliches Verfahren zur Feinverteilung von organischen Pigmenten.

Organische Pigmente sind seit langem bekannt und haben zum Pigmentieren von hochmolekularen organischen Materialien wie Lacken, Kunststoffen oder Druckfarben große industrielle Bedeutung erlangt. Bei der Synthese fallen die Pigmente oft als grobkristalline Rohpigmente an, die den technischen Anforderungen noch nicht entsprechen. Sie müssen erst einer Feinverteilung unterworfen werden, die eine Korngrößenverkleinerung bewirkt. Anschließend erfolgt meist noch eine thermische Behandlung, um den technischen Anforderungen entsprechende Pigmente zu erhalten, wie beispielsweise in der DE-A-27 42 575 beschrieben, oder es kommt zum Einsatz von pigmentären Dispergiermitteln oder anderer Zusatzstoffe, um spezielle Effekte zu erzielen, wie beispielsweise in der EP-A-0 666 288 oder in der EP-A-0 574 790 beschrieben.

Zur Überführung eines Rohpigments in die Pigment- oder Präpigmentform sind verschiedene Feinverteilungsverfahren bekannt, beispielsweise Acidpasting(Umfällen aus Lösemitteln, besonders aus Säuren), Salzknetung-, Trockenmahlund Nassmahlverfahren. Auch Kombinationen dieser Verfahren werden beschrieben. Die US-PS 3 607 336 beschreibt ein Verfahren zur Feinverteilung durch Acidpasting, bei dem das Pigment in Schwefelsäure gelöst und in turbulenter Strömung gefällt wird. Bei dem Verfahren entstehen große Mengen verdünnter Säure, die entweder ins Abwasser abgegeben oder aufwendig regeneriert werden müssen.
Die DE-A- 27 42 575 beschreibt ein Verfahren zur Feinverteilung durch Trockenmahlung ohne Salz; wie bei jeder Trockenmahlung wird die Umwelt durch Staub- und Lärmentwicklung belastet. Vibrationen der Mühle müssen durch aufwendige bauliche Maßnahmen gedämpft werden.
Die US-PS 5 919 299 beschreibt eine Kombination aus Trockenmahlung in Gegenwart von Salz und anschließendes Acidswelling. Der beschriebene Vorteil der reduzierten Salzmenge bei der Trockenmahlung erfordert den zweiten Schritt des Acidswellings, bei dem große Mengen Säure anfallen, die zusammen mit den immer noch beträchtlichen Mengen Salz ins Abwasser abgegeben oder aufwendig wiedergewonnen werden müssen und damit das Verfahren unwirtschaftlich machen.

Die EP-A-0 678 559 beschreibt ein Feinverteilungsverfahren ohne Einsatz von Salz. Dieser Vorteil wird jedoch durch ein zweistufiges Verfahren, nämlich durch eine Kombination aus Trocken- und Nassmahlung erkauft. Dadurch wird das Verfahren zeit- und kostenintensiv und damit unwirtschaftlich. Beim Nassmahlverfahren kommt es durch den Einsatz von Mahlkörpern zwangsläufig zu Abrieb und damit zu Eintrag von Fremdstoffen ins Produkt.

Die US-PS-6 013 126 beschreibt ein Salzknetungsverfahren in Gegenwart von Fettsäuren. Bei der Salzknetung fallen große Mengen Salz und Lösemittel an, die entweder die Umwelt belasten oder aufwendig wiedergewonnen werden müssen.

Bei den bislang bekannten mechanischen Feinverteilungsverfahren wird der größte Teil der Energie in Wärme umgewandelt und nur ein Bruchteil der eingetragenen Energie wird effektiv zur Mahlung verwendet. Bei Verwendung von Mahlhilfsmitteln wie Kugeln kommt es zu Abrieb und damit zu Kontamination des Produkts durch Fremdstoffe. Der scale-up von neuen Produkten vom Labormaßstab in den großtechnischen Maßstab ist oft aufwendig und kann Schwierigkeiten bereiten, da beispielsweise der Eintrag der mechanischen Energie, die Übertragung der Energie zur effektiven Mahlung, der Energieverlust durch Erzeugung von Wärme und die notwendige Abfuhr der Wärme stark von den Apparategeometrien und -größen abhängen und damit auch die Wirtschaftlichkeit des Verfahren im großtechnischen Maßstab mitbestimmen.

In der WO 00/44673 wird ein Verfahren zur Herstellung von Li-V-Oxid für Elektrodenmaterial durch Mahlung mit einem Mikrojetreaktor beschrieben.

In WO 00/61275 und in "Proceedings Microtec 2000, Bd. 1, S. 401-405" werden ein Mikrostrahlreaktor sowie Verfahren zur Durchführung chemischer und physikalischer Prozesse offenbart.

Der vorliegenden Erfindung lag die Aufgabe zugrunde, ein universell einsetzbares, kostengünstiges, technisch zuverlässiges und wirtschaftliches Verfahren zur Feinverteilung von organischen Pigmenten zu entwickeln, das gegebenenfalls mit den bei der Herstellung von Pigmenten bekannten Maßnahmen wie Einsatz von Lösemitteln, pigmentärer und nichtpigmentärer Dispergiermittel oder anderer Hilfsmittel kombiniert werden kann, bei dem ein unproblematischer scale-up möglich ist und bei dem auch keine Kontamination durch Fremdstoffe stattfinden kann.

Es wurde gefunden, dass die erfindungsgemäße Aufgabe überraschenderweise durch Einsatz eines Mikrojetreaktors gelöst werden kann.

Gegenstand der vorliegenden Erfindung ist ein Verfahren zur Feinverteilung von Pigmenten dadurch gekennzeichnet, dass man ein in grobkristallinem Zustand vorliegendes Rohpigment und/oder ein in schwer dispergierbarer Form vorliegendes Präpigment als Suspension in einem Mikrojetreaktor zweckmäßigerweise über eine oder mehrere Pumpen, vorzugsweise Hochdruckpumpen, durch Düsen in einem von einem Gehäuse umschlossenen Reaktorraum auf einen gemeinsamen Kollisionspunkt spritzt, wobei über eine Öffnung im Gehäuse in den Reaktorraum ein Gas oder eine verdampfende Flüssigkeit zur Aufrechterhaltung einer Gasatmosphäre im Reaktorraum, insbesondere im Kollisionspunkt der Suspensionsstrahlen, gegebenenfalls auch zur Kühlung, eingeleitet wird und die entstehende Pigmentsuspension und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

Für die erfindungsgemäße Feinverteilung der Pigmente ist eine hohe Mahl- und Dispergierwirkung erforderlich. Dies wird dadurch erreicht, dass die eingesetzten Suspensionen unter einem Druck von mindestens 50 bar, bevorzugt mindestens 500 bar, insbesondere von 500 bis 5000 bar, in den Reaktorraum gespritzt werden.

Um Materialverschleiß an den inneren Oberflächen des Gehäuses zu vermeiden, wird der Kollisionspunkt in den materialfernen Gasraum verlegt. Unter "materialfern" wird dabei verstanden, dass in der Umgebung des Kollisionspunkts der Strahlen durch das eingeleitete Gas oder die verdampfende Flüssigkeit eine Gasatmosphäre aufrechterhalten wird. Dies bedeutet, dass der Kollisionspunkt, in dem die Strahlen aufeinandertreffen, nicht an einer Gefäßwand oder einer Rohrwand anliegt. Dadurch wird Materialverschleiß verhindert, der dort auftreten würde, wo Kavitation an Materialwänden stattfindet. Zu Kavitation kommt es besonders bei Einsatz von hohen Drücken, insbesondere bei Drücken über 3000 bar. Des weiteren werden die kollidierenden Strahlen durch die Gasatmosphäre vor ihrem Zusammenprall nicht abgebremst, wie es beispielsweise der Fall wäre, wenn sie durch eine Flüssigkeit passieren müssten.

Das Material der Düsen soll möglichst hart und dadurch verschleißarm sein, es kommen beispielsweise Keramiken, wie Oxide, Carbide, Nitride oder Mischverbindungen daraus in Betracht, wobei vorzugsweise Aluminiumoxid, insbesondere als Saphir oder Rubin, eingesetzt wird, aber auch Diamant besonders geeignet ist. Es kommen als Hartstoffe auch Metalle, insbesondere gehärtete Metalle, in Betracht. Die Bohrungen der Düsen haben Durchmesser von kleiner als 2 mm, vorzugsweise kleiner 0,5 mm und insbesondere kleiner als 0,4 mm.

Der Mikrojetreaktor kann prinzipiell als Zwei-, Drei- oder Mehrstrahlreaktor ausgeführt werden, bevorzugt ist die Zweistrahl-Ausführung. Bei einer Anordnung mit zwei Strahlen treffen die Strahlen bevorzugt frontal (Winkel zwischen den Strahlen 180°) aufeinander, bei einer Dreistrahl-Anordnung ist ein Winkel von 120° zwischen den Strahlen zweckmäßig. Günstigerweise können die Düsen in einer auf den gemeinsamen Kollisionspunkt justierbaren Vorrichtung gelagert sein.

In einer besonders bevorzugten Ausführungsform des erfindungsgemäßen Verfahrens wird die Suspension mittels einer Hochdruckpumpe durch zwei sich gegenüberstehende Düsen frontal aufeinander gespritzt.

Die Temperaturen der zugeführten Suspensionen liegen zweckmäßiger Weise im Bereich von -50 bis +250°C, vorzugsweise zwischen 0 und 180°C, besonders bei 0 bis 100°C, insbesondere zwischen 10 und 80°C. Es kann auch über dem Siedepunkt des flüssigen Mediums unter Druck gearbeitet werden.

Falls erforderlich, kann mit dem eingeleiteten Gas oder der verdampfenden Flüssigkeit, die für die Aufrechterhaltung der Gasatmosphäre im Gehäuseinneren verwendet wird, gekühlt werden. Es kann auch über eine zusätzliche Bohrung im Gehäuse eine verdampfende Kühlflüssigkeit oder ein Kühlgas in den Reaktorraum eingeleitet werden. Dabei kann der Aggregatszustand des Kühlmediums temperaturund/oder druckbedingt sein. Es kann sich beispielsweise um Luft, Stickstoff, Kohlendioxid oder andere, inerte Gase oder Flüssigkeiten mit geeignetem Siedepunkt unter erhöhtem Druck handeln. Dabei ist es möglich, dass der Übergang des Kühlmediums vom flüssigen in den gasförmigen Zustand im Gehäuse selbst dadurch stattfindet, dass die bei der Mahlung freiwerdende Wärme den Wechsel des Aggregatzustandes bewirkt. Es ist auch möglich, dass die Verdunstungskälte eines sich entspannenden Gases zur Kühlung genutzt wird.
Das den Reaktorraum umschließende Gehäuse kann auch thermostatierbar ausgelegt werden und zur Kühlung verwendet werden; oder das Produkt kann nach Austritt aus dem Gehäuse gekühlt werden. Es kann beispielsweise der Druck im Reaktorraum mittels eines Druckhalteventils eingestellt und gehalten werden, so dass das verwendete Gas in flüssigem oder über- oder unterkritischem Zustand vorliegt. So kann beispielsweise die Verdunstungskälte eines Gases genutzt werden.
Wenn bei erhöhter Temperatur gearbeitet werden soll, kann die für die Erwärmung erforderliche Energie vor dem Austritt aus den Düsen der Suspension, beispielsweise in den zuführenden Leitungen, oder über das thermostatierbare Gehäuse oder über das eingeleitete Gas zugeführt werden. Die gewählte Temperatur kann grundsätzlich wegen der hohen Drücke in den Hochdrucklanzen auch erheblich über dem Siedepunkt des flüssigen Mediums liegen. Als flüssiges Medium kommen daher auch solche in Frage, die bei der Temperatur der Mahlung im Gehäuseinneren unter Normaldruck als Gase vorliegen.
Ist die Mahlintensität zu gering, so wird die gewünschte Feinverteilung nicht erreicht. Gegebenenfalls kann daher die Suspension auch mit mehr als einer Passage durch den Mikrojetreaktor gepumpt werden. Es kann auch im Kreislauf gemahlen werden. Die Anzahl der Passagen bzw. die Mahldauer bei Kreislaufmahlung ist abhängig von den Feinheitsanforderungen für das jeweilige Anwendungsgebiet. Normalerweise reichen 1 bis 10, vorzugsweise 1 bis 7, insbesondere 1 bis 5, Passagen.

Die Suspension besteht aus Roh- oder Präpigment, dem flüssigen Medium und gegebenenfalls Hilfsmitteln.

Für die Mahlung werden zweckmäßigerweise die bei ihrer Synthese oder bei ihrer Reinigung grobkristallin anfallenden Rohpigmente, Mischungen dieser Rohpigmente, Pigmentzubereitungen dieser Rohpigmente, oberflächenbehandelte Rohpigmente oder grobkristalline Mischkristallrohpigmente eingesetzt.
Als Roh- und Präpigmente kommen beispielsweise Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-, wie beispielsweise Triphendioxazine, Aminoanthrachinon-, Diketopyrrolopyrrol-, Indigo-, Thioindigo-, Thiazinindigo-, Isoindolin-, Isoindolinon-, Pyranthron-, Isoviolanthron-, Flavanthron-, Anthrapyrimidin- oder Carbon Black-Pigmente (Ruß); Mischkristalle oder Mischungen davon, insbesondere grobkristalline Chinacridonrohpigmente der β- oder der γ-Phase, grobkristalline Chinacridonmischkristallrohpigmente, grobkristalline Kupferphthalocyaninrohpigmente der α- oder β-Phase, grobkristalline chlorierte Kupferphthalocyanine, grobkristalline Dioxazin-, Perylen-, Indanthron-, Perinon-, Chinacridonchinon-, Anthrachinon-, Aminoanthrachinon- und Anthanthronrohpigmente.
Unter grobkristallinen Rohpigmenten werden solche Rohpigmente verstanden, die erst nach einer Zerkleinerung der Teilchen zum Pigmentieren von organischen Materialien geeignet sind. In den meisten Fällen sind dies solche mit einer mittleren Teilchengröße D₅₀ von mehr ats 1 µm.
Es können auch bereits feinverteilte, aber stark agglomerierte und damit schwer dispergierbare Präpigmente, Mischungen oder Pigmentzubereitungen von Präpigmenten, Mischkristallpräpigmente oder auch Mischungen von grobkristallinen Rohpigmenten und Präpigmenten eingesetzt werden.

Das flüssige Medium der (Roh/Prä)Pigmentsuspension kann Wasser, ein organisches Lösemittel oder eine Mischung daraus sein.
Die Mahlung kann in beliebigen pH-Bereichen durchgeführt werden, vorzugsweise im alkalischen oder neutralen Bereich.
Als flüssiges Medium werden beispielsweise Wasser, Alkohole mit 1 bis 10 C-Atomen, wie beispielsweise Methanol, Ethanol, n-Propanol, Isopropanol, Butanole, wie n-Butanol, sek.-Butanol, tert.-Butanol, Pentanole, wie n-Pentanol, 2-Methyl-2-butanol, Hexanole, wie 2-Methyl-2-pentanol, 3-Methyl-3-pentanol, 2-Methyl-2-hexanol, 3-Ethyl-3-pentanol, Octanole, wie 2,4,4-Trimethyl-2-pentanol, Cyclohexanol; oder Glykole, wie Ethylenglykol, Diethylenglykol, Propylenglykol, Dipropylenglykol, oder Glycerin; Polyglykole, wie Polyethylenglykole oder Polypropylenglykole; Ether, wie Methylisobutylether, Tetrahydrofuran oder Dimethoxyethan; Glykolether, wie Monomethyl- oder Monoethylether des Ethylenoder Propylenglykols, Diethylenglykol-monomethylether, Diethylenglykolmonoethylether, Butylglykole oder Methoxybutanol; Ketone, wie Aceton, Diethylketon, Methylisobutylketon, Methylethylketon oder Cyclohexanon; aliphatische Säureamide, wie Formamid, Dimethylformamid, N-Methylacetamid oder N,N-Dimethylacetamid; Harnstoffderivate, wie Tetramethylharnstoff; oder cyclische Carbonsäureamide, wie N-Methylpyrrolidon, Valero- oder Caprolactam; Ester, wie Carbonsäure-C₁-C₆-alkylester, wie Ameisensäurebutylester, Essigsäureethylester oder Propionsäurepropylester; oder Carbonsäure-C₁-C₆-glykolester; oder Glykoletheracetate, wie 1-Methoxy-2-propylacetat; oder Phthalsäure- oder Benzoesäure-C₁-C₆-alkylester, wie Benzoesäureethylester; cyclische Ester, wie Caprolacton; Nitrile, wie Acetonitril oder Benzonitril; aliphatische oder aromatische Kohlenwasserstoffe, wie Cyclohexan oder Benzol; oder durch Alkyl, Alkoxy, Nitro oder Halogen substituiertes Benzol, wie Toluol, Xylole, Ethylbenzol, Anisol, Nitrobenzol, Chlorbenzol, o-Dichlorbenzol, 1,2,4-Trichlorbenzol oder Brombenzol; oder andere substituierte Aromaten, wie Benzoesäure oder Phenol; aromatische Heterocyclen, wie Pyridin, Morpholin, Picolin oder Chinolin; sowie Hexamethylphosphorsäuretriamid, 1,3-Dimetyl-2-imidazolidinon, Dimethylsulfoxid und Sulfolan eingesetzt. Die genannten Lösemittel können auch als Mischungen eingesetzt werden.

Bevorzugte organische Lösemittel sind Alkohole mit 1 bis 6 C-Atomen, insbesondere Ethanol, Propanole, Butanole, Pentanole; aliphatische Carbonsäureamide, insbesondere Dimethylformamid oder N,N-Dimethylacetamid; cyclische Carbonsäureamide, insbesondere N-Methylpyrrolidon; aromatische Kohlenwasserstoffe, insbesondere Toluol, Xylole oder Ethylbenzol; aromatische Chlorkohlenwasserstoffe, insbesondere Chlorbenzol, o-Dichlorbenzol; und Dimethylsulfoxid.

Bevorzugt werden auch mit Wasser mischbare Lösemittel als Mischungen mit Wasser eingesetzt.

Die Pigmentkonzentration in der Suspension ist abhängig von der Rheologie der Suspension, sie sollte bei oder unter 30 Gew.-% liegen, im allgemeinen 3 bis 25 Gew.-% betragen, vorzugsweise zwischen 5 und 20 Gew.-% sein. Entscheidend ist lediglich, dass die Suspension noch förderbar ist.

Die Suspension kann außer der flüssigen Phase und dem Roh- oder Präpigment noch Hilfsmittel, wie beispielsweise Tenside, nichtpigmentäre und pigmentäre Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber, Lichtstabilisatoren, oder eine Kombination davon enthalten.
Die Zugabe der Hilfsmittel kann zu einem beliebigen Zeitpunkt vor, während oder nach der Mahlung erfolgen, auf einmal oder in mehreren Portionen. Möglich ist beispielsweise das Einspritzen eines Hilfsmittels mittels eines separaten Strahls in den Kollisionspunkt. Die Gesamtmenge der zugegebenen Hilfsmittel kann 0 bis 40 Gew.-%, bevorzugt 1 bis 30 Gew.-%, besonders bevorzugt 2,5 bis 25 Gew.-%, bezogen auf das Gesamtgewicht des Roh- bzw. Präpigments, betragen.

Als Tenside kommen anionische oder anionaktive, kationische oder kationaktive und nichtionische Substanzen oder Mischungen dieser Mittel in Betracht. Bevorzugt sind solche Tenside oder Mischungen von Tensiden, die bei der Mahlung nicht schäumen.
Als anionaktive Substanzen kommen beispielsweise Fettsäuretauride, Fettsäure-N-methyltauride, Fettsäureisethionate, Alkylphenylsulfonate, Alkylnaphthalinsulfonate, Alkylphenolpolyglykolethersulfate, Fettalkoholpolyglykolethersulfate, Fettsäureamidpolyglykolethersulfate, Alkylsulfosuccinamate, Alkenylbernsteinsäurehalbester, Fettalkoholpolyglykolethersulfosuccinate, Alkansulfonate, Fettsäureglutamate, Alkylsulfosuccinate, Fettsäuresarkoside; Fettsäuren, beispielsweise Palmitin-, Stearin- und Ölsäure; Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylaminopropylamin und p-Phenylendiamin in Betracht. Besonders bevorzugt sind Harzseifen, d.h. Alkalisalze von Harzsäuren.
Als kationaktive Substanzen kommen beispielsweise quaternäre Ammoniumsalze, Fettaminoxalkylate, oxalkylierte Polyamine, Fettaminpolyglykolether, Fettamine, von Fettaminen oder Fettalkoholen abgeleitete Di- und Polyamine und deren Oxalkylate, von Fettsäuren abgeleitete Imidazoline, und Salze dieser kationenaktiven Substanzen, wie beispielsweise Acetate, in Betracht.
Als nichtionogene Substanzen kommen beispielsweise Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpolyglykolethern, Fettsäureamidethoxylate, Fettalkoholalkylenoxid-Addukte und Alkylphenolpolyglykolether in Betracht.

Mit nichtpigmentären Dispergiermitteln sind Substanzen gemeint, die strukturell nicht durch chemische Modifikation von organischen Pigmente abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Lacken oder Druckfarben durch Dispergierung der Pigmente in den entsprechenden Bindemitteln, zugegeben. Es können polymere Substanzen, beispielsweise Polyolefine, Polyester, Polyether, Polyamide, Polyimine, Polyacrylate, Polyisocyanate, Block-Copolymere daraus, Copolymere aus den entsprechenden Monomeren, oder Polymere einer Klasse, die mit wenigen Monomeren einer anderen Klasse modifiziert sind, sein. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse®, Avecia; Disperbyk®, Byk, Efka®, Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren oder Carbonsäureestern, urethanhaltige Polymere von ethylenisch ungesättigten Monomeren, Urethan-modifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Kammdispergiermittel aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung.

Mit pigmentären Dispergiermittel sind Pigmentdispergatoren gemeint, die sich von einem organischen Pigment als Grundkörper ableiten und durch chemische Modifizierung dieses Grundkörpers hergestellt werden, beispielsweise saccharinhaltige Pigmentdispergatoren, piperidylhaltige Pigmentdispergatoren, von Naphthalen oder Perylen abgeleitete Pigmentdispergatoren, Pigmentdispergatoren mit funktionellen Gruppen, die über eine Methylengruppe mit dem Pigmentgrundkörper verknüpft sind, mit Polymeren chemisch modifizierte Pigmentgrundkörper, Sulfosäuregruppen haltige Pigmentdispergatoren, Sulfonamidgruppen haltige Pigmentdispergatoren, Ethergruppen haltige Pigmentdispergatoren, oder Carbonsäure-, Carbonsäureester- oder Carbonamidgruppen haltige Pigmentdispergatoren.

Vorzugsweise wird das Pigment direkt nach der Mahlung isoliert. Es ist aber auch möglich, eine Nachbehandlung (Finish) mit Wasser und/oder einem organischen Lösemittel durchzuführen, beispielsweise bei Temperaturen von 20 bis 250°C, gegebenenfalls auch unter Zusatz von Hilfsmitteln.
Es ist auch möglich, die nach der Mahlung vorliegenden Pigmentsuspensionen einzudampfen oder sprühzutrocknen, so dass eine Filtration entfallen kann.
Die Herstellung der Pigmente nach dem erfindungsgemäßen Verfahren erfolgt im wesentlichen ohne Abfallprodukte. Die wenigen Chemikalien können weiterverarbeitet oder wieder vollständig regeneriert werden.

Es war überraschend und nicht vorhersehbar, dass die Feinverteilung von Pigmenten durch den Zusammenprall von Strahlen in einem Mikrojetreaktor in dieser einfachen und technisch unkomplizierten Weise ohne ökologische Probleme möglich ist, da nach den bekannten Verfahren die Feinverteilung von Pigmenten nur in mehrstufigen Prozessen, mit erheblichen ökologischen oder ökonomischen Belastungen, mit Anfall großer Mengen Abfallprodukten wie Salz oder verdünnter Säure und/oder mit Eintrag von unerwünschten Stoffen ins Produkt durch Abrieb gelingt.

Die nach der vorliegenden Erfindung erhältlichen Pigmente zeichnen sich durch hervorragende coloristische und rheologische Eigenschaften, insbesondere durch hohe Flockungsstabilität, leichte Dispergierbarkeit, gutes Glanzverhalten und hohe Farbstärke aus.

Erfindungsgemäß hergestellte Pigmente eignen sich zum Pigmentieren von natürlichen oder synthetischen hochmolekularen organischen Materialien, wie beispielsweise Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, beispielsweise Aminoplaste, insbesondere Harnstoff- und Melamin-Formaldehydharze, Alkydharze, Acrylharze, Phenoplaste, Polycarbonate, Polyolefine, wie Polystyrol, Polyvinylchlorid, Polyethylen, Polypropylen, Polyacrylnitril, Polyacrylsäureester, Polyamide, Polyurethane oder Polyester, Gummi, Latices, Casein, Silikone und Silikonharze, einzeln oder in Mischungen.
Dabei spielt es keine Rolle, ob die erwähnten hochmolekularen organischen Verbindungen als plastische Massen, Gießharze, Pasten, Schmelzen oder in Form von Spinnlösungen, Lacken, Lasuren, Schäumen, Tuschen, Tinten, Beizen, Anstrichstoffen, Dispersionsfarben oder Druckfarben vorliegen. Je nach Verwendungszweck erweist es sich als vorteilhaft, die erfindungsgemäß erhaltenen Pigmente als Blends oder in Form von Präparationen oder Dispersionen zu benutzen. Bezogen auf das zu pigmentierende, hochmolekulare organische Material setzt man die erfindungsgemäß hergestellten Pigmente in einer Menge von vorzugsweise 0,05 bis 30 Gew.-%, vorzugsweise 0,1 bis 15 Gew.-% ein. Mit den nach dem erfindungsgemäßen Verfahren hergestellten Pigmenten können die technisch gängigen Einbrennlacke aus der Klasse der Alkyd-Melamin-Harzlacke, Acryl-Melamin-Harzlacke, Polyesterlacke, Highsolidacrylharzlacke, wässrige Lacke auf Polyurethanbasis sowie Zweikomponentenlacke auf Basis polyisocyanatvernetzbarer Acrylharze und insbesondere Automobil-Metallic-Lacke pigmentiert werden.

Die erfindungsgemäß hergestellten Pigmente sind auch geeignet als Farbmittel in elektrophotographischen Tonern und Entwicklern, wie z.B. Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im Nachhinein mit diesen Zusätzen modifiziert werden.

Des weiteren sind die erfindungsgemäß hergestellten Pigmente geeignet als Farbmittel in Pulver und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen.
Als Pulverlackharze werden typischerweise Epoxidharze, carboxyl- und hydroxylgruppenhaltige Polyesterharze, Polyurethan- und Acrylharze zusammen mit üblichen Härtern eingesetzt. Auch Kombinationen von Harzen finden Verwendung. So werden beispielsweise häufig Epoxidharze in Kombination mit carboxyl- und hydroxylgruppenhaltigen Polyesterharzen eingesetzt. Typische Härterkomponenten (in Abhängigkeit vom Harzsystem) sind beispielsweise Säureanhydride, Imidazole sowie Dicyandiamid und deren Abkömmlinge, verkappte Isocyanate, Bisacylurethane, Phenol- und Melaminharze, Triglycidylisocyanurate, Oxazoline und Dicarbonsäuren.

Außerdem sind die erfindungsgemäß hergestellten Pigmente als Farbmittel in Ink-Jet Tinten auf wässriger und nichtwässriger Basis sowie in solchen Tinten, die nach dem Hot-melt-Verfahren arbeiten, geeignet.

Darüber hinaus sind die erfindungsgemäß hergestellten Pigmente auch als Farbmittel für Farbfilter, sowohl für die subtraktive als auch für die additive Farberzeugung, geeignet.

Zur Beurteilung der Eigenschaften der nach der vorliegenden Erfindung hergestellten Pigmente auf dem Lacksektor wurden aus der Vielzahl der bekannten Lacke ein aromatenhaltiger Alkydmelaminharzlack (AM) auf Basis eines mittelöligen Alkydharzes und eines butanolveretherten Melaminharzes, ein Polyesterlack (PE) auf Basis von Celluloseacetobutyrat, ein High-Solid-Acrylharzeinbrennlack auf Basis einer nichtwässrigen Dispersion (HS) sowie ein wässriger Lack auf Polyurethanbasis (PUR) ausgewählt.
Die Bestimmung der Farbstärke und des Farbtons erfolgte nach DIN 55986.
Die Rheologie des Mahlguts nach der Dispergierung (mill base-Rheologie) wurde anhand der folgenden fünfstufigen Skala bewertet:
- 5: dünnflüssig
- 4: flüssig
- 3: dickflüssig
- 2: leicht gestockt
- 1: gestockt

Nach dem Verdünnen des Mahlguts auf die Pigmentendkonzentration wurde die Viskosität mit dem Viskospatel nach Rossmann, Typ 301 der Firma Erichsen beurteilt.
Glanzmessungen erfolgten an Folienaufgüssen unter einem Winkel von 20° nach DIN 67530 (ASTMD 523) mit dem "multigloss"-Glanzmeßgerät der Firma Byk-Mallinckrodt.
Die Bestimmung der Lösemittelechtheit erfolgte nach DIN 55976.
Die Bestimmung der Überlackierechtheit erfolgte nach DIN 53221.
Die Bestimmung der mittleren Teilchendurchmesser D₅₀ der grobkristallinen Rohpigmente erfolgte durch Laserlichtbeugung.
Die Bestimmung der mittleren Teilchendurchmesser D₅₀ der Pigmente in den Pigmentpräparationen erfolgte durch graphische Auswertung von elektronenmikroskopischen Aufnahmen.
Die Bestimmung der Kristallphase erfolgte durch Röntgenspektroskopie. Die Aufnahme der Röntgenspektren erfolgte mit CuKα-Strahlung.

Im vorangegangenen Text und in den nachstehenden Beispielen beziehen sich Teile jeweils auf Gewichtsteile und Prozent jeweils auf Gewichtsprozent der so beschriebenen Substanzen.

### Beispiel 1

Eine 5 %ige wässrige P.V.23-Rohpigment-Suspension wird mit einem Druck von 3800 bar in einem Zweistrahl-Mikrojetreaktor durch die frontal sich gegenüberstehenden Düsen aufeinander gespritzt. Die Düsen haben jeweils einen Durchmesser von 100 µm, die Strahlen treffen sich im Gasraum. Durch Druckluft wird die Suspension aus dem Mikrojetreaktor herausgefördert. Es werden insgesamt 10 Passagen gefahren. Das Pigment wird abgesaugt, mit Wasser gewaschen und bei 80°C getrocknet.

## Patentansprüche

1. Verfahren zur Feinverteilung von Pigmenten, **dadurch gekennzeichnet, dass** man ein in grobkristallinem Zustand vorliegendes Rohpigment und/oder ein in schwer dispergierbarer Form vorliegendes Präpigment als Suspension in einem Mikrojetreaktor durch Düsen in einem von einem Gehäuse umschlossenen Reaktorraum auf einen gemeinsamen Kollisionspunkt spritzt, wobei über eine Öffnung im Gehäuse in den Reaktorraum ein Gas oder eine verdampfende Flüssigkeit zur Aufrechterhaltung einer Gasatmosphäre im Reaktorraum eingeleitet wird und die entstehende Pigmentsuspension und das Gas oder die verdampfte Flüssigkeit durch eine weitere Öffnung im Gehäuse durch Überdruck auf der Gaseintrittsseite oder durch Unterdruck auf der Produkt- und Gasaustrittsseite aus dem Reaktor entfernt wird.

2. Verfahren nach Anspruch 1, **dadurch gekennzeichnet, dass** die Suspension unter einem Druck von mindestens 50 bar, vorzugsweise 500 bis 5000 bar, in den Reaktorraum gespritzt wird.

3. Verfahren nach Anspruch 1 oder 2, **dadurch gekennzeichnet, dass** die Temperatur der Roh- oder Präpigmentsuspension -50 bis +250°C, vorzugsweise 0 bis 180°C, beträgt.

4. Verfahren nach mindestens einem der Ansprüche 1 bis 3, **dadurch gekennzeichnet, dass** die Suspension zu maximal 30 Gew.-%, vorzugsweise 3 bis 25 Gew.-%, bezogen auf das Gesamtgewicht der Suspension, aus Roh- und/oder Präpigment besteht.

5. Verfahren nach mindestens einem der Ansprüche 1 bis 4, **dadurch gekennzeichnet, dass** die Suspension ein wässriges, wässrig-organisches oder organisches Medium enthält.

6. Verfahren nach Anspruch 5, **dadurch gekennzeichnet, dass** das organische oder wässrig-organische Medium C₁-C₁₀-Alkanole, Glykole, Polyglykole, Ether, Glykolether, Ketone, aliphatische Säureamide, Harnstoffderivate, cyclische Carbonsäureamide, Ester, Nitrile, aliphatische oder aromatische Kohlenwasserstoffe, aromatische Heterocyclen, Hexamethylphosphorsäuretriamid, 1,3-Dimethyl-2-imidazolidinon, Dimethylsulfoxid, Sulfolan oder Mischungen dieser Lösemittel untereinander und/oder mit Wasser umfasst.

7. Verfahren nach mindestens einem der Ansprüche 1 bis 6, **dadurch gekennzeichnet, dass** die Suspension zu 0 bis 40 Gew.-%, vorzugsweise 1 bis 30 Gew.-%, bezogen auf das Gesamtgewicht des Roh- und/oder Präpigments, aus einem oder mehreren Hilfsmitteln aus der Gruppe der Tenside, nichtpigmentäre und pigmentäre Dispergiermittel, Füllstoffe, Stellmittel, Harze, Wachse, Entschäumer, Antistaubmittel, Extender, Farbmittel zum Nuancieren, Konservierungsmittel, Trocknungsverzögerungsmittel, Additive zur Steuerung der Rheologie, Netzmittel, Antioxidantien, UV-Absorber und Lichtstabilisatoren besteht.

8. Verfahren nach mindestens einem der Ansprüche 1 bis 7, **dadurch gekennzeichnet, dass** Roh- und/oder Präpigmente aus der Gruppe der Perylen-, Perinon-, Chinacridon-, Chinacridonchinon-, Anthrachinon-, Anthanthron-, Benzimidazolon-, Disazokondensations-, Azo-, Indanthron-, Phthalocyanin-, Triarylcarbonium-, Dioxazin-, Aminoanthrachinon-, Diketopyrrolopyrrol-, Indigo-, Thioindigo-, Thiazinindigo-, Flavanthron-, Isoindolin-, Isoindolinon-, Pyranthron-, Isoviolanthron-, Flavanthron-, Anthrapyrimidin- oder Carbon Black-Pigmente (Ruß) oder Mischkristalle davon eingesetzt werden.

9. Verfahren nach mindestens einem der Ansprüche 1 bis 8, **dadurch gekennzeichnet, dass** das Gas Luft, Stickstoff oder Kohlendioxid ist.

10. Verfahren nach mindestens einem der Ansprüche 1 bis 9, **dadurch gekennzeichnet, dass** der gemeinsame Kollisionspunkt in einem materialfernen Bereich des Reaktorraums liegt.

11. Verfahren nach mindestens einem der Ansprüche 1 bis 10, **dadurch gekennzeichnet, dass** die Roh-, Prä- und/oder Pigmentsuspension durch zwei, drei oder mehrere, bevorzugt zwei, Düsen auf einen gemeinsamen Kollisionspunkt gespritzt wird.

12. Verfahren nach mindestens einem der Ansprüche 1 bis 11, **dadurch gekennzeichnet, dass** die eingesetzte Suspension mit 1 bis 10, vorzugsweise 1 bis 7, Passagen durch den Mikrojetreaktor gepumpt wird oder dass die Suspension im Kreislauf durch den Mikrojetreaktor gepumpt wird.

## Claims

1. A process for the fine division of pigments which comprises spraying a coarsely crystalline crude pigment and/or a poorly dispersible prepigment in suspension form through nozzles to a point of conjoint collision in a reactor chamber enclosed by a housing in a microjet reactor, a gas or an evaporating liquid being passed into the reactor chamber through an opening in the housing for the purpose of maintaining a gas atmosphere in the reactor chamber, and the resulting pigment suspension and the gas or the evaporated liquid being removed from the reactor through a further opening in the housing by means of overpressure on the gas entry side or underpressure on the product and gas exit side.

2. The process as claimed in claim 1, wherein the suspension is sprayed into the reactor chamber with a pressure of at least 50 bar, preferably from 500 to 5 000 bar.

3. The process as claimed in claim 1 or 2, wherein the temperature of the crude pigment or prepigment suspension is from -50 to +250°C, preferably from 0 to 180°C.

4. The process as claimed in at least one of claims 1 to 3, wherein the suspension consists of not more than 30% by weight, preferably from 3 to 25% by weight, based on the overall weight of the suspension, of crude pigment and/or prepigment.

5. The process as claimed in at least one of claims 1 to 4, wherein the suspension comprises an aqueous, aqueous-organic or organic medium.

6. The process as claimed in claim 5, wherein the organic or aqueous-organic medium comprises C₁-C₁₀ alkanols, glycols, polyglycols, ethers, glycol ethers, ketones, aliphatic acid amides, urea derivatives, cyclic carboxamides, esters, nitriles, aliphatic or aromatic hydrocarbons, aromatic heterocycles, hexamethylphosphoramide, 1,3-dimethyl-2-imidazolidinone, dimethyl sulfoxide, sulfolane, or mixtures of these solvents with one another and/or with water.

7. The process as claimed in at least one of claims 1 to 6, wherein the suspension consists of from 0 to 40% by weight, preferably from 1 to 30% by weight, based on the overall weight of the crude pigment and/or prepigment, of one or more auxiliaries selected from the group of the surfactants, nonpigmentary and pigmentary dispersants, fillers, standardizers, resins, waxes, defoamers, antidust agents, extenders, shading colorants, preservatives, drying retardants, rheology control additives, wetting agents, antioxidants, UV absorbers, and light stabilizers.

8. The process as claimed in at least one of claims 1 to 7, wherein crude pigments and/or prepigments are used selected from the group of the perylene, perinone, quinacridone, quinacridonequinone, anthraquinone, anthanthrone, benzimidazolone, disazo condensation, azo, indanthrone, phthalocyanine, triarylcarbonium, dioxazine, aminoanthraquinone, diketopyrrolopyrrole, indigo, thioindigo, thiazineindigo, flavanthrone, isoindoline, isoindolinone, pyranthrone, isoviolanthrone, flavanthrone, anthrapyrimidine, or carbon black pigments or mixed crystals thereof.

9. The process as claimed in at least one of claims 1 to 8, wherein the gas is air, nitrogen or carbon dioxide.

10. The process as claimed in at least one of claims 1 to 9, wherein the conjoint collision point is located in a material-remote region of the reactor chamber.

11. The process as claimed in at least one of claims 1 to 10, wherein the crude-pigment, prepigment and/or pigment suspension is sprayed to a point of conjoint collision through two, three or more, preferably two, nozzles.

12. The process as claimed in at least one of claims 1 to 11, wherein the suspension used is pumped through the microjet reactor in from 1 to 10, preferably from 1 to 7, passes or wherein the suspension is pumped in circulation through the microjet reactor.

## Revendications

1. Procédé de division fine de pigments, **caractérisé en ce qu'**on pulvérise un pigment brut se trouvant dans un état cristallin grossier et/ou un prépigment se trouvant sous forme difficile à disperser sous la forme de suspension à travers des buses vers un point de collision conjoint dans une chambre de réacteur fermée par un boîtier dans un réacteur à microjets, en faisant passer un gaz ou un liquide vaporisé dans la chambre de réacteur à travers une ouverture dans le boîtier pour maintenir une atmosphère gazeuse dans la chambre de réacteur, et en enlevant du réacteur la suspension de pigment produite et le gaz ou le liquide évaporé à travers une autre ouverture dans le boîtier par une surpression du côté de l'entrée de gaz ou par une dépression du côté du produit ou de la sortie de gaz.

2. Procédé selon la revendication 1, **caractérisé en ce que** la suspension est pulvérisée dans. la chambre de réacteur sous une pression d'au moins 50 bar, de préférence de 500 à 5000 bar.

3. Procédé selon la revendication 1 ou 2, **caractérisé en ce que** la température de la suspension de pigment brut ou de prépigment est entre -50 et + 250 °C, de préférence entre 0 et 180 °C.

4. Procédé selon au moins une des revendications 1 à 3, **caractérisé en ce que** la suspension est constituée au maximum de 30% en poids, de préférence de 3 à 25 % en poids, par rapport au poids total de la suspension, de pigment brut et/ou de prépigment.

5. Procédé selon au moins une des revendications 1 à 4, **caractérisé en ce que** la suspension contient un milieu aqueux, aqueux-organique ou organique.

6. Procédé selon la revendication 5, **caractérisé en ce que** le milieu organique ou aqueux-organique comprend des alcanols en C₁-C₁₀, des glycols, des polyglycols, des éthers, des glycoléthers, des cétones, des amides d'acide aliphatiques, des dérivés d'urée, des amides cycliques d'acide carboxylique, des esters, des nitriles, des hydrocarbures aliphatiques ou aromatiques, des hétérocycles aromatiques, le triamide d'acide hexaméthyl-phosphorique, la 1,3-diméthyl-2-imidazolidinone, le diméthylsulfoxyde, le sulfolane ou des mélanges des ces solvants entre eux et/ou avec de l'eau.

7. Procédé selon au moins une des revendications 1 à 6, **caractérisé en ce que** la suspension est constituée de 0 à 40 % en poids, de préférence de 1 à 30 % en poids, par rapport au poids total du pigment brut ou du prépigment, d'un ou plusieurs adjuvants dans le groupe des agents tensio-actifs, des agents dispersants non pigmentaires et pigmentaires, des charges, des agents de fixation, des résines, des cires, des antimousse, des antipoussière, des diluants, des colorants de nuançage, des conservateurs, des agents retardateurs de séchage, des additifs pour la régulation de la rhéologie, des agents mouillants, des antioxydants, des absorbeurs d'UV et des stabilisants contre la lumière.

8. Procédé selon au moins une des revendications 1 à 7, **caractérisé en ce que** l'on utilise des pigments bruts et/ou des prépigments dans le groupe des pigments pérylène, périnone, quinacridone, quinacridonequinone, anthraquinone, anthanthrone, benzimidazolone, de condensation disazoïque, azoïques, indanthrone, phtalocyanine, triarylcarbonium, dioxazine, aminoanthraquinone, dicétopyrrolopyrrole, indigo, thioindigo, thiazinindigo, flavanthrone, isoindoline, pyranthrone, isoviolanthrone, flavanthrone, anthrapyrimidine ou de noir de carbone (suie) ou des cristaux mixtes de ceux-ci.

9. Procédé selon au moins une des revendications 1 à 8, **caractérisé en ce que** le gaz est l'air, l'azote ou le dioxyde de carbone.

10. Procédé selon au moins une des revendications 1 à 9, **caractérisé en ce que** le point de collision conjoint se situe dans une zone de la chambre du réacteur éloignée de la matière.

11. Procédé selon au moins une des revendications 1 à 10, **caractérisé en ce que** l'on pulvérise la suspension de pigment brut, de pré- et/ou de pigment à travers deux, trois ou plus, de préférence deux, buses vers un point de collision conjoint.

12. Procédé selon au moins une des revendications 1 à 11, **caractérisé en ce que** l'on pompe la suspension utilisée avec 1 à 10, de préférence 1 à 7, passages à travers le réacteur à microjets et **en ce qu'**on pompe la suspension en boucle fermée à travers le réacteur à microjets.
